(19) Europäisches Patentamt / European Patent Office / Office européen des brevets

(11) **EP 4 074 103 B1**

(12) **EUROPEAN PATENT SPECIFICATION**

(45) Date of publication and mention
of the grant of the patent:
**01.07.2026 Bulletin 2026/27**

(21) Application number: **19952366.3**

(22) Date of filing: **13.12.2019**

(51) International Patent Classification (IPC):
*H04L 27/26* (2006.01)   *H04L 25/03* (2006.01)
*H04W 52/02* (2009.01)

(52) Cooperative Patent Classification (CPC):
**H04W 52/0219; H04L 25/03828; H04L 27/2614;
H04L 27/2636; H04L 27/26412;** Y02D 30/70

(86) International application number:
**PCT/CN2019/125217**

(87) International publication number:
**WO 2021/093074 (20.05.2021 Gazette 2021/20)**

(54) **FREQUENCY-DOMAIN MODULATION SCHEME FOR LOW PEAK AVERAGE POWER RATIO**

FREQUENZDOMÄNENMODULATIONSSCHEMA FÜR EIN NIEDRIGES
SPITZENLEISTUNGSVERHÄLTNIS

SCHÉMA DE MODULATION DE DOMAINE FRÉQUENTIEL PERMETTANT UN FAIBLE RAPPORT
DE PUISSANCE DE CRÊTE SUR PUISSANCE MOYENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.10.2022 Bulletin 2022/42**

(73) Proprietor: **ZTE Corporation
Shenzhen, Guangdong 518057 (CN)**

(72) Inventors:
• **XIN, Yu
Shenzhen, Guangdong 518057 (CN)**
• **XU, Jun
Shenzhen, Guangdong 518057 (CN)**
• **XU, Jin
Shenzhen, Guangdong 518057 (CN)**
• **HUA, Jian
Shenzhen, Guangdong 518057 (CN)**

(74) Representative: **Vossius & Partner
Patentanwälte Rechtsanwälte mbB
Siebertstraße 3
81675 München (DE)**

(56) References cited:
CA-A1- 2 667 187        CN-A- 105 681 241
CN-A- 108 270 713       US-A1- 2011 258 244
US-A1- 2018 034 676

• ZHU CHEN ET AL: "Experimental comparison
between Nyquist-WDM and continuous DFT-S-
OFDM systems", 2014 THE EUROPEAN
CONFERENCE ON OPTICAL COMMUNICATION
(ECOC), SYSTEMATIC PARIS REGION SYSTEMS
AND ICT CLUSTER, 21 September 2014
(2014-09-21), pages 1 - 3, XP032689340, DOI:
10.1109/ECOC.2014.6964138
• SAMSUNG: "Modulation/waveform optimization
for further PAPR reduction", vol. RAN WG1, no.
Spokane, USA; 20170116 - 20170120, 10 January
2017 (2017-01-10), XP051203291, Retrieved from
the Internet <URL:http://www.3gpp.org/ftp/
tsg_ran/WG1_RL1/TSGR1_AH/NR_AH_1701/
Docs/> [retrieved on 20170110]
• SAMSUNG: "On spectrum shaping methods for
[pi]/2-BPSK DFT-s-OFDM", vol. RAN WG1, no.
Qingdao, P.R. China; 20170627 - 20170630, 26
June 2017 (2017-06-26), XP051300646, Retrieved
from the Internet <URL:http://www.3gpp.org/ftp/
Meetings_3GPP_SYNC/RAN1/Docs/> [retrieved
on 20170626]

- ZTE: "Discussion on Low PAPR RS", 3GPP DRAFT; R1-1812259, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 16 November 2018 (2018-11-16), Mobile Competence Centre ; 650, route des Lucioles ; F-06921 Sophia-Antipolis Cedex ; France, pages 1 - 12, XP051478426
- SAMSUNG: "Low PAPR modulation and waveform", 3GPP DRAFT; R1-1612559 LOW PAPR MODULATION AND WAVEFORM-SAMSUNG, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20161114 - 20161118, 13 November 2016 (2016-11-13), Mobile Competence Centre ; 650, route des Lucioles ; F-06921 Sophia-Antipolis Cedex ; France, XP051176505
- HUAWEI, HISILICON: "Discussion on DMRS sequence design for low PAPR", 3GPP DRAFT; R1-1903973 DISCUSSION ON DMRS SEQUENCE DESIGN FOR LOW PAPR-NEW, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Xi'an, China; 20190408 - 20190412, 7 April 2019 (2019-04-07), Mobile Competence Centre ; 650, route des Lucioles ; F-06921 Sophia-Antipolis Cedex ; France, XP051699386

# EP 4 074 103 B1

**Description**

TECHNICAL FIELD

This patent document is directed generally to wireless communications.

BACKGROUND

Mobile communication technologies are moving the world toward an increasingly connected and networked society. The rapid growth of mobile communications and advances in technology have led to greater demand for capacity and connectivity. Other aspects, such as energy consumption, device cost, spectral efficiency, and latency are also important to meeting the needs of various communication scenarios. Various techniques, including new ways to provide higher quality of service, longer battery life, and improved performance are being discussed

US 2018/0034676 A1 relates to method and apparatus for transmitting a signal.

CA 2 667 187 A1 relates to a DFT-spread-OFDM for the 3GPP LTE uplink.

C. Zhu, B. Corcoran and A. J. Lowery, "Experimental comparison between Nyquist-WDM and continuous DFT-S-OFDM systems," 2014 The European Conference on Optical Communication (ECOC), Cannes, France, 2014, pp. 1-3 relates to Nyquist-WDM and continuous DFT-S-OFDM systems with 16×64-Gb/s PDM-16QAM signals over 800-km SSMF.

SUMMARY

The invention is specified by the independent claims. Preferred embodiments are defined in the dependent claims. In the following description, although numerous features may be designated as optional, it is nevertheless acknowledged that all features comprised in the independent claims are not to be read as optional.

This patent document describes, among other things, techniques for reducing Peak Average Power Ratio (PAPR) in signal transmissions.

BRIEF DESCRIPTION OF DRAWINGS

FIG. 1 is a flowchart representation of a wireless communication method in accordance with the present technology.

FIG. 2 is a flowchart representation of another wireless communication method in accordance with the present technology.

FIG. 3A illustrates an example sequence of operations in accordance with the present technology.

FIG. 3B illustrates another example sequence of operations in accordance with the present technology.

FIG. 4 shows an example of a wireless communication system where techniques in accordance with one or more embodiments of the present technology can be applied.

FIG. 5 is a block diagram representation of a portion of a radio station in accordance with one or more embodiments of the present technology can be applied.

DETAILED DESCRIPTION

Section headings are used in the present document only to improve readability and do not limit scope of the disclosed embodiments and techniques in each section to only that section. Certain features are described using the example of 5G wireless protocol. However, applicability of the disclosed techniques is not limited to only 5G wireless systems.

In high-frequency wireless communication scenarios, path loss and shadow attenuation are relatively large. Thus, the signal-to-noise ratio in some areas at the edge of the cell is low. Moreover, the efficiency of the power amplifier (PA) is relatively low at high frequencies. To improve the signal to interference and noise ratio (SINR) and also save power consumption of the User Equipment (UE), it is desirable to have the UE transmit signals at the lower Peak Average Power Ratio (PAPR).

Furthermore, terminal devices may want to greatly reduce power consumption in the case of massive Machine Type Communication (mMTC). For example, in some scenarios, it is desirable to have a long battery life (e.g., of more than ten years) to reduce the need of dispatching maintenance team to replace batteries. To improve the PA efficiency of such terminal devices, the transmitted signals should be with the lower PAPR. In particular, when a large number of user devices gain non-orthogonal access, the SINR is very low. There exists a need to use a low modulation and coding scheme (MCS) and low PAPR signal modulation to improve the transmission quality.

In the current Fifth-Generation (5G) New Radio (NR) standard, although the peak-to-average ratio of DFT-s-OFDM signals is relatively low, it is still difficult to meet low PAPR requirements of various application scenarios of B5G or 6G. This patent document describes techniques that can be implemented in various embodiments to use a modulation scheme that further reduces PAPR.

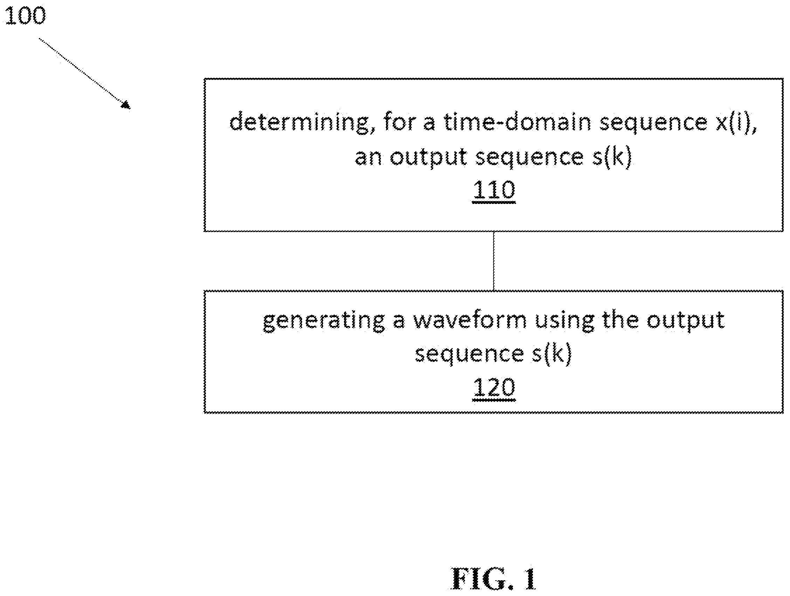

FIG. 1 is a flowchart representation of a wireless communication method 100 in accordance with the present technology. The method 100 may be implemented by a radio station such as a base station or a wireless device as described in the present document. For example, a processor in the radio station (e.g., processor electronics described in the present document) may be configured to implement the method 100. The method 100 includes, at operation 110, determining, for a time-domain sequence $x(i)$, an output sequence $s(k)$. The output sequence $s(k)$ is an inverse Fourier transform of a frequency-domain sequence $S(j)$. $S(j)$ is an output of a frequency-domain shaping operation based on a frequency-domain sequence $Y(j)$ and a set of coefficients. $Y(j)$ corresponds to the time-domain sequence $x(i)$ based on a parameter N. The set of coefficients can include zero coefficients and non-zero coefficients. The number of the non-zero coefficients is based on N, and values of the non-zero coefficients correspond to phase values distributed between 0 to $\pi/2$ to reduce a peak to average power ratio of the output sequence. The method 100 also includes, at operation 120, generating a waveform using the output sequence $s(k)$, where i is from 0 to I-1, j is from 0 to J-1, k is from 0 to K-1, I <J<= K, and wherein I, J, and K are non-negative integers and N is a positive integer.

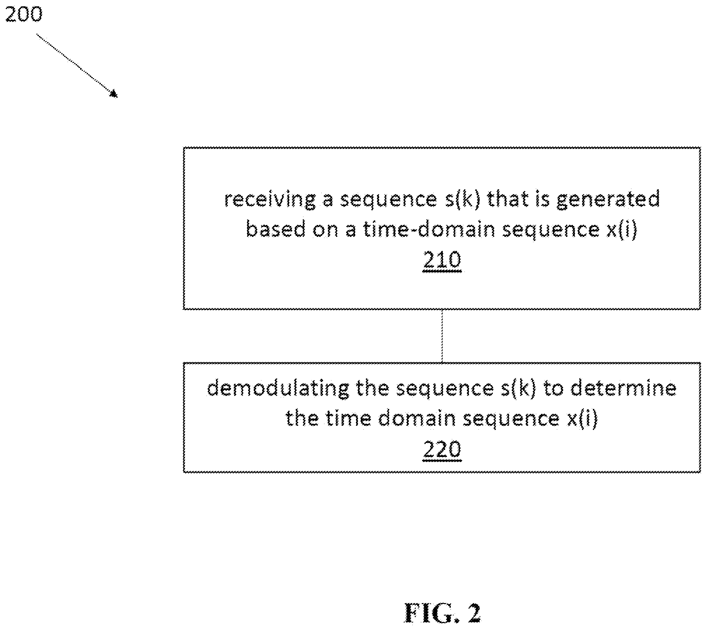

FIG. 2 is a flowchart representation of another wireless communication method 200 in accordance with the present technology. The method 200 may be implemented by a radio station such as a base station or a wireless device as described in the present document. For example, a processor in the radio station (e.g., processor electronics described in the present document) may be configured to implement the method 200. The method 200 includes, at operation 210, receiving a sequence $s(k)$ that is generated based on a time-domain sequence $x(i)$. The sequence $s(k)$ is an inverse Fourier transform of a frequency-domain sequence $S(j)$, and $S(j)$ is an output of a frequency-domain shaping operation based on a frequency-domain sequence $Y(j)$ and a set of coefficients. $Y(j)$ corresponds to the time-domain sequence $x(i)$ based on a parameter N. The set of coefficients can include zero coefficients and non-zero coefficients. The number of non-zero coefficients in the set of coefficients is based on N, and values of the non-zero coefficients correspond to phase values distributed between 0 to $\pi/2$ to reduce a peak to average power ratio of the output sequence. The method 200 also includes, at operation 220, demodulating the sequence $s(k)$ to determine the time domain sequence $x(i)$, where i is from 0 to I-1, j is from 0 to J-1, k is from 0 to K-1, and I <J<= K. I, J, and K are non-negative integers and N is a positive integer.

In some embodiments, the number of the non-zero coefficients is 2N+1. In some embodiments, the non-zero coefficients are represented as $[f(0), f(1), ..., f(2N)] = p \cdot [g(0), g(1), ..., g(2N)]$, p being a scalar value. In some embodiments, the number of the non-zero coefficients is to 2N+2. In some embodiments, the non-zero coefficients are $[f(0), f(1), ..., f(2N+1)]$ as a convolution of $p \cdot [g(0), g(1), ..., g(2N)]$ and $[h(0), h(1)]$, p being a scalar value. In some embodiments, $[h(0), h(1)] = [1, 1]$. In some embodiments, $g(0)=g(2N)$, $g(1)=g(2N-1)$, ..., and $g(N-1)=g(N+1)$, and $g(0)$, $g(1)$, ..., and $g(N)$ correspond to phase values that are distributed between 0 to $\pi/2$. In some embodiments, $g(i) = \cos(\theta_i)$, $0 \leq i \leq N$, and $0 \leq \theta_i \leq \pi/2$.

In some embodiments, p comprises a normalization parameter. The value of p can be 1. The value of p can also be based on N. For example, $p = \dfrac{1}{2\cos(\frac{\pi}{8})}$ when N = 1 or $p = \dfrac{1}{2\cos(\frac{\pi}{12})}$ when N =2. In some embodiments, p is the same for all elements. In some embodiments, p may vary for different elements in the sequence.

In some embodiments, the frequency-domain shaping operation comprises a dot-multiplication of $Y(j)$ and a frequency domain sequence $Z(j)$. $Z(j)$ is determined based on a Fourier transform on the non-zero coefficients or the set of coefficients. In some embodiments, $Y(j)$ is obtained by performing a Fourier transform on the time-domain sequence $y(j)$. The time-domain sequence $y(j)$ is formed by inserting N zero coefficients before or after each coefficient of the sequence $x(i)$. The sequence $x(i)$ is generated by mapping data bits to constellation points according to a modulation scheme. In some embodiments, $Y(j)$ is obtained by repeating a frequency-domain sequence $X(i)$ N times such that a length of $Y(j)$ is (N+1) times of a length of $X(i)$. $X(i)$ is generated by performing a Fourier transform on a time-domain sequence $x(i)$, and the time-domain sequence $x(i)$ is generated by mapping data bits to constellation points according to a modulation scheme. The advantage of repeating the frequency-domain sequence or inserting zero coefficients between coefficients of the time-domain sequence is that data with a path difference of two steps is not affected by the weighted sum of the multiple paths. For example, given three paths $D^{-1}$, $D^0$, and $D^{-1}$, data in path $D^0$ does not impact data in path $D^{-1}$ and $D^1$. Assume that the coefficient for path $D^{-1}$ is $d(-1)$, the coefficient for path $D^0$ is $d(0)$ and the coefficient for path $D^1$ is $d(1)$. In some embodiments, $d(0) = 1$ so that there is no impact on data for path $D^0$. In some embodiments, $d(-1) = d(1) = \dfrac{\sqrt{2}}{2}$ so that, after the multipath delay operation, the phase obtained by superimposing $D^{-1}$ and $D^1$ is between the phases of two adjacent elements, thereby reducing PAPR.

In some embodiments, the sequence x(i) includes a data sequence or a reference sequence. In some embodiments, the sequence x(i) comprises one or more zero coefficients. In some embodiments, the modulation scheme includes $\pi/2$- Binary Phase Shift Keying (BPSK). Using $\pi/2$-BPSK as the modulation schemes gives the advantage that the phase between each adjacent two elements in the data sequence is $\pi/2$. In some embodiments, after the multi-path delay operation, the phase after super-positioning data paths has a difference 0 or $\pi/4$ (e.g., for N = 1), or alternatively 0 or $\pi/6$ (e.g., for N = 2) with adjacent elements, thereby reducing the peak-to-average ratio (PAPR) of the resulting data sequence. The phase difference can also be smaller than $\pi/6$ (e.g., for N > 2).

When the modulation scheme of $\pi/2$-BPSK is combined with the path coefficients, after superimposing data of paths (e.g., $D^{-1}$ and $D^1$), the resulting modulus value is equal to the modulus of path $D^0$. Thus, the modulus values of all the element data of the data sequence [s(k)] are equal, and the phase difference between adjacent elements is relatively small, thereby reducing the PAPR of the data sequence [s(k)]. Moreover, after receiving the data that includes the data sequence [s(k)], the receiving end obtains the data including the data sequence [x(i)] by using a correlation detection algorithm such as maximum ratio combining, which reduces processing complexity at the receiving side. The data sequence [x(i)] does not cause error propagation between data elements during demodulation. In addition, although the length of [s(k)] is doubled than the length of [x(i)], which requires more physical resources, the improvement of signal-to-noise ratio (SNR) (e.g., experiments have shown that SNR can be improved by more than 3 dB) can compensate for the loss of transmission efficiency.

As further described in the present document, the above-described methods provide a flexible scheme to manipulate the input data sequence for achieving low PAPR. For example, the path delay operation and the coefficients can be variable based on the input data sequences (that is, the value of N can be variable). The moduli of all elements of the resulting sequence are the same. In particular, the moduli are equal to 1 when they are normalized by parameter p, which reduce the PAPR. The disclosed techniques also impose low complexity on the transmitting and/or receiving ends. Some examples of the disclosed techniques are described in the following example embodiments.

**Embodiment 1**

Frequency domain data sequence [Y(j)] includes elements [Y(0), Y(1), ..., Y(J-1)]. The frequency-domain sequence Y(j) can be determined by repeating a frequency-domain sequence X(i) multiple times. For example, X(i) can be repeated to obtain Y(j), where i=0, ..., I-1, j=0, ..., J-1, and J=2I (that is, each element of X(i) appears twice). In some embodiments, Y(j) is obtained by repeating a frequency-domain sequence X(i) N times such that a length of Y(j) is (N+1) times of a length of X(i).

A predefined frequency domain data sequence [Z(j)] includes elements [Z(0), Z(1), ..., Z(J-1)]. Z(j) can be generated based on a time-domain data sequence f(n) through operations such as a Fourier transform. The number of non-zero values in the time-domain data sequence f(n) is based on a parameter N. For example, f(n) can include 2N+1 non-zero values that are represented as [f(0), f(1), ..., f(2N)] = p·[g(0), g(1), ..., g(2N)], p being a scalar value. As another example, f(n) can include 2N+2 non-zero values. In some embodiments, f(n) is represented as p·[g(0), g(1), ..., g(2N)] ⊗ [[h(0), h(1)]], where p is a scalar value and ⊗ is the convolution operation. In some embodiments, [h(0), h(1)] = [1, 1].

In some embodiments, the elements in g(n) are symmetrical. That is, g(0)=g(2N), g(1)=g(2N-1), ..., and g(N-1)=g(N+1). Also, g(0), g(1), ..., and g(N) correspond to phase values that are distributed between 0 to $\pi/2$. In some embodiments, g(i) = cos($\theta_i$), $0 \le i \le N$, and $0 \le \theta_i \le \pi/2$.

In some embodiments, p comprises a normalization parameter. The value of p can be 1. The value of p can also be based on N. For example, $p = \dfrac{1}{2\cos(\dfrac{\pi}{8})}$ when N = 1 or $p = \dfrac{1}{2\cos(\dfrac{\pi}{12})}$ when N =2. In some embodiments, p is the same for all elements. In some embodiments, p may vary for different elements in the sequence.

After [Y(j)] is dot-multiplied by [Z(j)], the data sequence [S(j)] is formed as follows:

$$[S(j)] = [Y(0)·Z(0), Y(1)·Z(1), ..., Y(J-1)·Z(J-1)],$$

where "·" represents dot-product.

In some embodiments, the operation of dot-multiplying is also referred to as a filtering operation by a filter module. The parameters of the filtering operation correspond to the non-zero coefficients f(n).

In some embodiments, when oversampling is not required, the data sequence [S(j)] is directly subjected to Invert Fourier Transform (IFFT) to form a data sequence [s(k)]. In this case, J=K.

In some embodiments, when oversampling is required, a plurality of zero coefficients are inserted in the data sequence [S(j)] to form a data sequence [S(k)], and then IFFT is performed to form a data sequence [s(k)]. In this case, J<K.

In both cases, the data sequence [s(k)] is carried on the physical time-frequency resources for transmission.

**Embodiment 2**

Frequency domain data sequence [Y(j)] includes elements [Y(0), Y(1), ..., Y(J-1)]. The frequency-domain sequence Y(j) can be determined by performing a Fourier transform on a time-domain data sequence y(j). The time-domain data sequence y(j) is determined based on inserting zero elements before or after each element in a time-domain data sequence (xi).

A predefined frequency domain data sequence [Z(j)] includes elements [Z(0), Z(1), ..., Z(J-1)]. Z(j) can be generated based on a time-domain data sequence f(n) through operations such as a Fourier transform. The number of non-zero values in the time-domain data sequence f(n) is based on a parameter N. For example, f(n) can include 2N+1 non-zero values represented as [f(0), f(1), ..., f(2N)] = p·[g(0), g(1), ..., g(2N)], p being a scalar value. As another example, f(n) can include 2N+2 non-zero values. In some embodiments, f(n) is represented as p·[g(0), g(1), ..., g(2N)] ⊗ [h(0), h(1)], where p is a scalar value and ⊗ is the convolution operation. In some embodiments, [h(0), h(1)] = [1, 1].

In some embodiments, the elements in g(n) are symmetrical. That is, g(0)=g(2N), g(1)=g(2N-1), ..., and g(N-1) =g(N+1). Also, g(0), g(1), ..., and g(N) correspond to phase values that are distributed between 0 to $\pi/2$. In some embodiments, g(i) = cos($\theta_i$), $0 \le i \le N$, and $0 \le \theta_i \le \pi/2$.

In some embodiments, p comprises a normalization parameter. The value of p can be 1. The value of p can also be based on N. For example, $p = \dfrac{1}{2\cos(\dfrac{\pi}{8})}$ when N = 1 or $p = \dfrac{1}{2\cos(\dfrac{\pi}{12})}$ when N = 2. In some embodiments, p is the same for all elements. In some embodiments, p may vary for different elements in the sequence.

Data sequence [S(j)] is formed by dot-multiplying frequency domain data sequence [Y(j)]=[Y(0), Y(1), ..., Y(J-1)] and frequency domain data sequence [Z(j)]=[Z(0), Z(1), ..., Z(J-1)] as follows:

$$[S(j)]=[Y(0){\cdot}Z(0), Y(1){\cdot}Z(1), ..., Y(J\text{-}1){\cdot}Z(J\text{-}1)],$$

where "·" represents dot-product.

In some embodiments, when oversampling is not required, the data sequence [S(j)] is directly subjected to Invert Fourier Transform (IFFT) to form a data sequence [s(k)]. In this case, J=K.

In some embodiments, when oversampling is required, a plurality of zero coefficients are inserted in the data sequence [S(j)] to form a data sequence [S(k)], and then IFFT is performed to form a data sequence [s(k)]. In this case, J<K.

In both cases, the data sequence [s(k)] is carried on the physical time-frequency resources for transmission.

**Embodiment 3**

A multi-path delay operation is defined as $p\left(cos\dfrac{\pi}{4}D^{-1} + \left(1 + cos\dfrac{\pi}{4}\right)D^0 + \left(1 + cos\dfrac{\pi}{4}\right)D^1 + cos\dfrac{\pi}{4}D^2\right)$. Here, $D^{-1}$ corresponds to a path with a delay value of -1. $D^0$ corresponds a path of a delay value of 0 (that is, there is no delay). $D^1$ corresponds to a path of a delay value of 1. $D^2$ corresponds to a path of a delay value of 2. The non-zero coefficients for the four paths are $p\left(cos\dfrac{\pi}{4}, 1, cos\dfrac{\pi}{4}\right) \otimes [1,1] = \left[p \times cos\dfrac{\pi}{4}, p \times \left(1 + cos\dfrac{\pi}{4}\right), p \times \left(1 + cos\dfrac{\pi}{4}\right), p \times cos\dfrac{\pi}{4}\right]$. In some embodiments, p comprises a normalization parameter. The value of p can be 1. The value of p can also be based on N. For example, $p = \dfrac{1}{2\cos(\dfrac{\pi}{8})}$ when N = 1. In some embodiments, p is the same for all elements. In some embodiments, p may vary for different elements in the sequence. The frequency domain data sequence [Z(j)] is formed by Fourier transforms from these delay paths.

Data sequence [S(j)] is formed by dot-multiplying frequency domain data sequence [Y(j)]=[Y(0), Y(1), ..., Y(J-1)] and frequency domain data sequence [Z(j)]=[Z(0), Z(1), ..., Z(J-1)] as follows:

$$[S(j)]=[Y(0)\cdot Z(0),\ Y(1)\cdot Z(1),\ ...,\ Y(J\text{-}1)\cdot Z(J\text{-}1)],$$

where "·" represents dot-product.

In some embodiments, when oversampling is not required, the data sequence [S(j)] is directly subjected to Invert Fourier Transform (IFFT) to form a data sequence [s(k)]. In this case, J=K.

In some embodiments, when oversampling is required, a plurality of zero coefficients are inserted in the data sequence [S(j)] to form a data sequence [S(k)], and then IFFT is performed to form a data sequence [s(k)]. In this case, J<K.

In both cases, the data sequence [s(k)] is carried on the physical time-frequency resources for transmission.

**Embodiment 4**

A multi-path delay operation is defined as $p\left(cos\dfrac{\pi}{6}D^{-2}+cos\dfrac{\pi}{3}D^{-1}+D^{0}+cos\dfrac{\pi}{6}D^{1}+cos\dfrac{\pi}{3}D^{2}\right)$. That is, N = 2. Here, $D^{-2}$ corresponds to a path with a delay value of -2. $D^{-1}$ corresponds to a path with a delay value of -1. $D^{0}$ corresponds a path of a delay value of 0 (that is, there is no delay). $D^{1}$ corresponds to a path of a delay value of 1. $D^{2}$ corresponds to a path of a delay value of 2. The coefficients for the four paths are $p\times cos\dfrac{\pi}{6}$, $p\times cos\dfrac{\pi}{3}$, $1$, $p\times cos\dfrac{\pi}{3}$, and $p\times cos\dfrac{\pi}{6}$ respectively. In some embodiments, p comprises a normalization parameter. The value of p can be 1. The value of p can also be based on N. For example, $p=\dfrac{1}{2\cos(\dfrac{\pi}{12})}$ when N =2. In some embodiments, p is the same for all elements. In some embodiments, p may vary for different elements in the sequence. The frequency domain data sequence [Z(j)] is formed by Fourier transforms from these delay paths.

Data sequence [S(j)] is formed by dot-multiplying frequency domain data sequence [Y(j)]=[Y(0), Y(1), ..., Y(J-1)] and frequency domain data sequence [Z(j)]=[Z(0), Z(1), ..., Z(J-1)] as follows:

$$[S(j)]=[Y(0)\cdot Z(0),\ Y(1)\cdot Z(1),\ ...,\ Y(J\text{-}1)\cdot Z(J\text{-}1)],$$

where "·" represents dot-product.

In some embodiments, when oversampling is not required, the data sequence [S(j)] is directly subjected to Invert Fourier Transform (IFFT) to form a data sequence [s(k)]. In this case, J=K.

In some embodiments, when oversampling is required, a plurality of zero coefficients are inserted in the data sequence [S(j)] to form a data sequence [S(k)], and then IFFT is performed to form a data sequence [s(k)]. In this case, J<K.

In both cases, the data sequence [s(k)] is carried on the physical time-frequency resources for transmission.

**Embodiment 5**

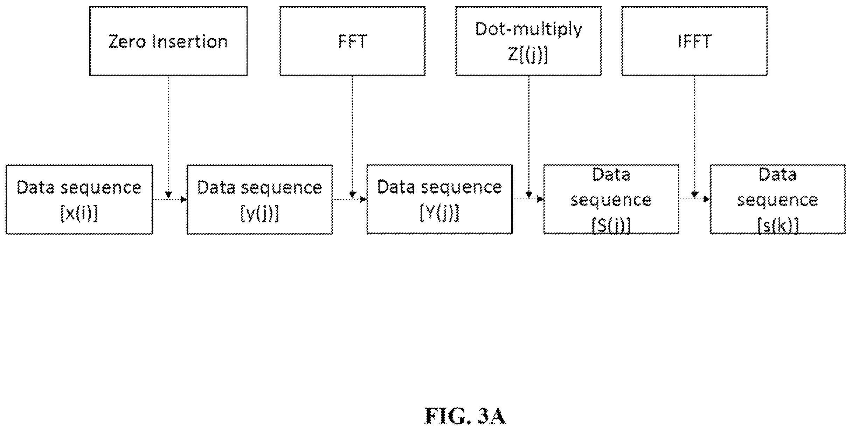

FIG. 3A illustrates an example sequence of operations in accordance with the present technology. The time-domain sequence x(i) can be a data sequence or a reference sequence. The sequence x(i) can also include one or more zeros and constellation modulated data. For example, a user data sequence [b(m)] that comprises 0s and 1s is first modulated by constellation points to generate a data sequence [x(i)]. The constellation modulation includes π/2-BPSK, π/4-Quadrature Phase Shift Keying (QPSK), QPSK, 16-Quadrature Amplitude Modulation (QAM), and/or Amplitude and phase-shift keying (APSK). In some embodiments, the sequence x(i) is a part of a data sequence which is transmitted by a wireless device. The sequence [y(j)] can be generated by inserting zero coefficients into x(i). The zero coefficients can be inserted before each coefficient of x(i). The zero coefficients can also be inserted after each coefficient of x(i).

After performing an FFT operation on the time-domain sequence [y(j)], a frequency-domain sequence [Y(j)] is generated. A dot-multiplication is then performed for [Y(j)] and [Z(j)] to generated [S(j)]. [Z(j)] can be predefined (e.g., as described in embodiments above). For example, elements of [Z(j)] are determined based on time-domain coefficients such as $\left(cos\dfrac{\pi}{4},1,cos\dfrac{\pi}{4}\right)$, $\left(cos\dfrac{\pi}{4},\left(1+cos\dfrac{\pi}{4}\right),\left(1+cos\dfrac{\pi}{4}\right),cos\dfrac{\pi}{4}\right)$ or $\left(cos\dfrac{\pi}{3},cos\dfrac{\pi}{6},1,cos\dfrac{\pi}{6},cos\dfrac{\pi}{3}\right)$.

Then, an IFFT operation is performed on [S(j)] to generate data sequence [s(k)], where J<=K. Before the IFFT operation, the following steps may be performed: (1) generating a second sequence W(u) by repeating the sequence S(j) multiple times, where u=0, 1, 2, ..., U-1 and U <= K; (2) generating a sequence V(u) by dot-multiplying the second sequence W(u) with a predefined sequence F(u), and (3) performing the inverse Fourier transform using the sequence V(u). Here, J<=U<=K.

**Embodiment 6**

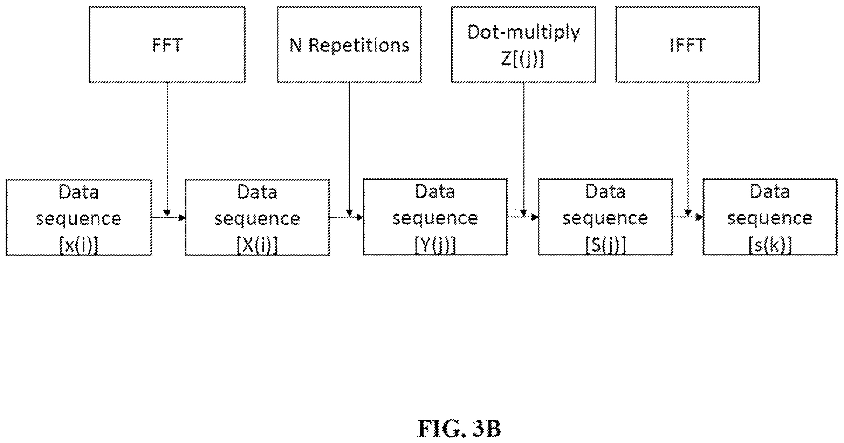

FIG. 3B illustrates another example sequence of operations in accordance with the present technology. The time-domain sequence x(i) can be a data sequence or a reference sequence. The sequence x(i) can also include one or more zeros and constellation modulated data. For example, a user data sequence [b(m)] that comprises 0s and 1s is first modulated by constellation points to generate a data sequence [x(i)]. The constellation modulation includes $\pi/2$-BPSK, $\pi/4$-QPSK, QPSK, 16QAM, and/or APSK. In some embodiments, the sequence x(i) is a part of a data sequence which is transmitted by a wireless device. A frequency-domain sequence [X(i)] is formed by performing an FFT operation on sequence x(i).

A frequency-domain sequence [Y(j)] is then formed by repeating sequence [X(j)] multiple times, such as N times where N >=2. For example, when N=2, [X(i)]=[X(0), X(1), ..., X(I-1)] and [Y(j)]=[X(0), X(1), ..., X(I-1), X(0), X(1), ..., X(I-1)].

A dot-multiplication is then performed for [Y(j)] and [Z(j)] to generated [S(j)]. [Z(j)] can be predefined (e.g., as described in embodiments above). For example, elements of [Z(j)] are determined based on time-domain coefficients such as $\left(cos\frac{\pi}{4}, 1, cos\frac{\pi}{4}\right)$, $\left(cos\frac{\pi}{4}, \left(1+cos\frac{\pi}{4}\right), \left(1+cos\frac{\pi}{4}\right), cos\frac{\pi}{4}\right)$ or $\left(cos\frac{\pi}{3}, cos\frac{\pi}{6}, 1, cos\frac{\pi}{6}, cos\frac{\pi}{3}\right)$.

Then, an IFFT operation is performed on [S(j)] to generate data sequence [s(k)], where J<=K. Before the IFFT operation, the following steps may be performed: (1) generating a second sequence W(u) by repeating the sequence S(j) multiple times, where u=0,1, 2, ..., U-1 and U <= K; (2) generating a sequence V(u) by dot-multiplying the second sequence W(u) with a predefined sequence F(u), and (3) performing the inverse Fourier transform using the sequence V(u). Here, J<=U<=K.

In some embodiments, other operations can be performed before the data sequence [s(k)] is carried on a physical time-frequency resource for transmission, such as performing another frequency shaping, adding a reference sequence in the data sequence [s(k)], adding a reference sequence before or after the data sequence [s(k)], and/or filtering of the data sequence [s(k)].

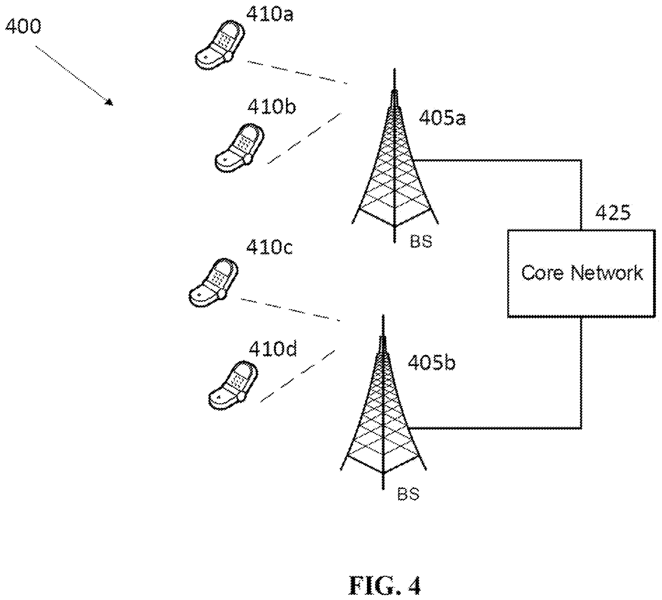

FIG. 4 shows an example of a wireless communication system 400 where techniques in accordance with one or more embodiments of the present technology can be applied. A wireless communication system 400 can include one or more base stations (BSs) 405a, 405b, one or more wireless devices 410a, 410b, 410c, 410d, and a core network 425. A base station 405a, 405b can provide wireless service to wireless devices 410a, 410b, 410c and 410d in one or more wireless sectors. In some implementations, a base station 405a, 405b includes directional antennas to produce two or more directional beams to provide wireless coverage in different sectors.

The core network 425 can communicate with one or more base stations 405a, 405b. The core network 425 provides connectivity with other wireless communication systems and wired communication systems. The core network may include one or more service subscription databases to store information related to the subscribed wireless devices 410a, 410b, 410c, and 410d. A first base station 405a can provide wireless service based on a first radio access technology, whereas a second base station 405b can provide wireless service based on a second radio access technology. The base stations 405a and 405b may be co-located or may be separately installed in the field according to the deployment scenario. The wireless devices 410a, 410b, 410c, and 410d can support multiple different radio access technologies. The techniques and embodiments described in the present document may be implemented by the base stations of wireless devices described in the present document.

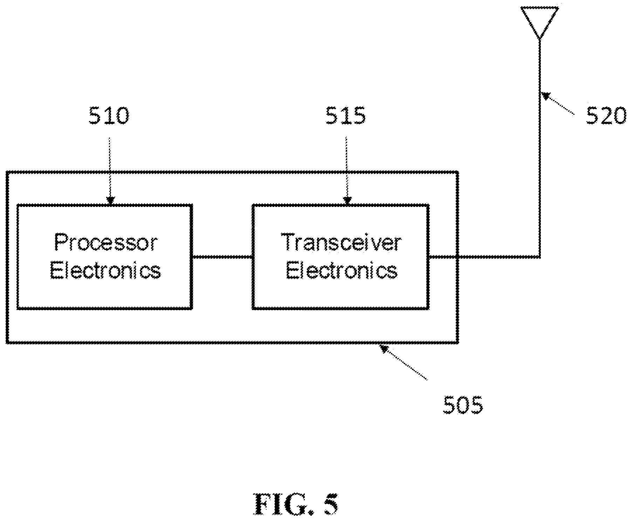

FIG. 5 is a block diagram representation of a portion of a radio station in accordance with one or more embodiments of the present technology can be applied. A radio station 505 such as a base station or a wireless device (or UE) can include processor electronics 510 such as a microprocessor that implements one or more of the wireless techniques presented in this document. The radio station 505 can include transceiver electronics 515 to send and/or receive wireless signals over one or more communication interfaces such as antenna 520. The radio station 505 can include other communication interfaces for transmitting and receiving data. Radio station 505 can include one or more memories (not explicitly shown) configured to store information such as data and/or instructions. In some implementations, the processor electronics 510 can include at least a portion of the transceiver electronics 515. In some embodiments, at least some of the disclosed techniques, modules or functions are implemented using the radio station 505.

It will be appreciated that the present document discloses techniques that can be embodied in various embodiments to efficiently reducing PAPR in signal transmissions to meeting meet low PAPR requirements of various application scenarios. The disclosed and other embodiments, modules and the functional operations described in this document can be implemented in digital electronic circuitry, or in computer software, firmware, or hardware, including the structures disclosed in this document and their structural equivalents, or in combinations of one or more of them. The disclosed and other embodiments can be implemented as one or more computer program products, i.e., one or more modules of computer program instructions encoded on a computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal, that is generated to encode information for transmission to suitable receiver apparatus.

A computer program (also known as a program, software, software application, script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this document can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random-access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

While this patent document contains many specifics, these should not be construed as limitations on the scope of any invention or of what may be claimed, but rather as descriptions of features that may be specific to particular embodiments of particular inventions. Certain features that are described in this patent document in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. Moreover, the separation of various system components in the embodiments described in this patent document should not be understood as requiring such separation in all embodiments.

Only a few implementations and examples are described, and other implementations, enhancements and variations can be made based on what is described and illustrated in this patent document.

**Claims**

1. A method for wireless communication, comprising:

   determining, for a time-domain sequence x(i), an output sequence s(k) that is an inverse Fourier transform of a frequency-domain sequence S(j), wherein S(j) is an output of a frequency-domain shaping operation comprising a dot-multiplication of a frequency-domain sequence Y(j) and a frequency domain sequence Z(j), wherein Z(j) is determined based on a Fourier transform of a set of coefficients, wherein Y(j) corresponds to the time-domain sequence x(i) based on a parameter N, and

wherein values of non-zero coefficients in the set of coefficients are represented as: [f(0), f(1), ..., f(2N)] = p·[g(0), g(1), ..., g(2N)], or [f(0), f(1), ..., f(2N+1)] being a convolution of p·[g(0), g(1), ..., g(2N)] and [h(0), h(1)], wherein g(0) =g(2N), g(1)=g(2N-1), ..., and g(N-1)=g(N+1), wherein g(0), g(1), ..., and g(N) correspond to the phase values between 0 to $\pi/2$, [h(0), h(1)] = [1, 1], and wherein p is a scalar value; and
generating a waveform using the output sequence s(k), wherein i is from 0 to I-1, j is from 0 to J-1, k is from 0 to K-1, I <J<= K, and wherein I, J, and K are non-negative integers and N is a positive integer.

2. A wireless communication method, comprising:

receiving a sequence s(k) that is generated based on a time-domain sequence x(i), wherein the sequence s(k) is an inverse Fourier transform of a frequency-domain sequence S(j), and wherein S(j) is an output of a frequency-domain shaping operation comprising a dot-multiplication of a frequency-domain sequence Y(j) and a frequency domain sequence Z(j), wherein Z(j) is determined based on a Fourier transform of a set of coefficients, wherein Y(j) corresponds to the time-domain sequence x(i) based on a parameter N, and
wherein values of non-zero coefficients in the set of coefficients are represented as: [f(0), f(1), ..., f(2N)] = p·[g(0), g(1), ..., g(2N)], or [f(0), f(1), ..., f(2N+1)] being a convolution of p·[g(0), g(1), ..., g(2N)] and [h(0), h(1)], wherein g(0) =g(2N), g(1)=g(2N-1), ..., and g(N-1)=g(N+1), wherein g(0), g(1), ..., and g(N) correspond to the phase values between 0 to $\pi/2$, [h(0), h(1)] = [1, 1], and wherein p is a scalar value; and
demodulating the sequence s(k) to determine the time domain sequence x(i), wherein i is from 0 to I-1, j is from 0 to J-1, k is from 0 to K-1, and I <J<= K, and wherein I, J, and K are non-negative integers and N is a positive integer.

3. The method of any one or more of claims 1 to 2, wherein p comprises a normalization parameter, wherein p is 1, $\dfrac{1}{2\cos\left(\frac{\pi}{12}\right)}$, or $\dfrac{1}{2\cos\left(\frac{\pi}{8}\right)}$..

4. The method of any one or more of claims 1 to 3, wherein Y(j) is obtained by repeating a frequency-domain sequence X(i) N times such that a length of Y(j) is (N+1) times of a length of X(i), wherein X(i) is generated by performing a Fourier transform on the time-domain sequence x(i), and wherein the time-domain sequence x(i) is generated by mapping data bits to constellation points according to a modulation scheme.

5. The method of claim 4, wherein the modulation scheme includes $\pi/2$- Binary Phase Shift Keying, BPSK.

6. The method of claim 5, wherein a phase between adjacent elements of the time-domain sequence x(i) is 0 or $\pi/4$ for N=1, or 0 or $\pi/6$ for N=2.

7. The method of claim 2, further comprising:
determining the time-domain sequence x(i) using a maximum ratio combining algorithm.

8. The method of any of claims 5, 6, wherein the moduli of all elements of the sequence s(k) are the same when the modulation scheme of $\pi/2$-BPSK is combined with path coefficients after superimposing data of paths.

9. The method of any of claims 1 to 8, wherein the time-domain sequence x(i) includes a data sequence or a reference sequence.

10. The method of any of claims 1 to 9, wherein the time-domain sequence x(i) comprises one or more zero coefficients.

11. A communication apparatus, comprising a processor (510) configured to implement a method recited in any one or more of claims 1 to 10.

12. A computer program product having code stored thereon, the code, when executed by a processor (510), causing the processor (510) to implement a method recited in any one or more of claims 1 to 10.

**Patentansprüche**

1. Verfahren für eine drahtlose Kommunikation, aufweisend:

Bestimmen, für eine Zeitbereichssequenz x(i), einer Ausgabesequenz s(k), die eine inverse Fourier-Transformation einer Frequenzbereichssequenz S(j) ist, wobei S(j) eine Ausgabe einer Frequenzbereichsformungsoperation ist, aufweisend eine Punktmultiplikation einer Frequenzbereichssequenz Y(j) und einer Frequenzbereichssequenz Z(j), wobei Z(j) basierend auf einer Fourier-Transformation eines Satzes von Koeffizienten bestimmt wird, wobei Y(j) der Zeitbereichssequenz x(i) basierend auf einem Parameter N entspricht, und wobei Werte von Nicht-Null-Koeffizienten in dem Satz von Koeffizienten dargestellt sind als: [f(0), f(1), ..., f(2N)] = p·[g(0), g(1), ..., g(2N)], oder [f(0), f(1), ..., f(2N+1)] ist eine Faltung von p[g(0), g(1), ..., g(2N)] und [h(0), h(1)], wobei g(0)=g(2N), g(1)=g(2N-1), ..., und g(N-1)=g(N+1), wobei g(0), g(1), ..., und g(N) den Phasenwerten zwischen 0 bis $\pi/2$ entsprechen, [h(0), h(1)] = [1, 1], und wobei p ein skalarer Wert ist; und

Erzeugen einer Wellenform unter Verwendung der Ausgabesequenz s(k), wobei i von 0 bis 1-1 ist, j von 0 bis J-1 ist, k von 0 bis K-1 ist, I < J <= K, und wobei I, J und K nichtnegative ganze Zahlen sind und N eine positive ganze Zahl ist.

2.  Drahtloses Kommunikationsverfahren, aufweisend:

Empfangen einer Sequenz s(k), die basierend auf einer Zeitbereichssequenz x(i) erzeugt wird, wobei die Sequenz s(k) eine inverse Fourier-Transformation einer Frequenzbereichssequenz S(j) ist, und wobei S(j) eine Ausgabe einer Frequenzbereichsformungsoperation ist, aufweisend eine Punktmultiplikation einer Frequenzbereichssequenz Y(j) und einer Frequenzbereichssequenz Z(j), wobei Z(j) basierend auf einer Fourier-Transformation eines Satzes von Koeffizienten bestimmt wird, wobei Y(j) der Zeitbereichssequenz x(i) basierend auf einem Parameter N entspricht, und wobei Werte von Nicht-Null-Koeffizienten in dem Satz von Koeffizienten dargestellt sind als: [f(0), f(1), ..., f(2N)] = p·[g(0), g(1), ..., g(2N)], oder [f(0), f(1), ..., f(2N+1)] ist eine Faltung von p[g(0), g(1), ..., g(2N)] und [h(0), h(1)], wobei g(0)=g(2N), g(1)=g(2N-1), ..., und g(N-1)=g(N+1), wobei g(0), g(1), ..., und g(N) den Phasenwerten zwischen 0 bis $\pi/2$ entsprechen, [h(0), h(1)] = [1, 1], und wobei p ein skalarer Wert ist; und

Demodulieren der Sequenz s(k), um die Zeitbereichssequenz x(i) zu bestimmen, wobei i von 0 bis 1-1 ist, j von 0 bis J-1 ist, k von 0 bis K-1 ist, und I < J <= K, und wobei I, J und K nichtnegative ganze Zahlen sind und N eine positive ganze Zahl ist.

3.  Verfahren nach einem oder mehreren der Ansprüche 1 bis 2, wobei p einen Normalisierungsparameter aufweist, wobei p gleich 1, $\frac{1}{2\text{kos}\left(\frac{\pi}{12}\right)}$, oder $\frac{1}{2\text{kos}\left(\frac{\pi}{8}\right)}$ ist.

4.  Verfahren nach einem oder mehreren der Ansprüche 1 bis 3, wobei Y(j) durch N-maliges Wiederholen einer Frequenzbereichssequenz X(i) derart erhalten wird, dass eine Länge von Y(j) das (N+1)-fache einer Länge von X(i) beträgt, wobei X(i) durch Durchführen einer Fourier-Transformation an der Zeitbereichssequenz x(i) erzeugt wird, und wobei die Zeitbereichssequenz x(i) durch Abbilden von Datenbits auf Konstellationspunkte gemäß einem Modulationsschema erzeugt wird.

5.  Verfahren nach Anspruch 4, wobei das Modulationsschema $\pi/2$-Binäre Phasenumtastung, BPSK, einschließt.

6.  Verfahren nach Anspruch 5, wobei eine Phase zwischen angrenzenden Elementen der Zeitbereichssequenz x(i) gleich 0 oder $\pi/4$ für N=1, oder 0 oder $\pi/6$ für N=2 ist.

7.  Verfahren nach Anspruch 2, ferner aufweisend:
Bestimmen der Zeitbereichssequenz x(i) unter Verwendung eines Maximum-Ratio-Combining-Algorithmus.

8.  Verfahren nach einem der Ansprüche 5, 6, wobei die Module aller Elemente der Sequenz s(k) gleich sind, wenn das Modulationsschema von $\pi/2$-BPSK mit Pfadkoeffizienten nach Überlagern von Daten von Pfaden kombiniert wird.

9.  Verfahren nach einem der Ansprüche 1 bis 8, wobei die Zeitbereichssequenz x(i) eine Datensequenz oder eine Referenzsequenz einschließt.

10.  Verfahren nach einem der Ansprüche 1 bis 9, wobei die Zeitbereichssequenz x(i) einen oder mehrere Nullkoeffizienten aufweist.

11.  Kommunikationseinrichtung, aufweisend einen Prozessor (510), der konfiguriert ist, um ein Verfahren, das in einem oder mehreren der Ansprüche 1 bis 10 angegeben ist, zu implementieren.

12. Computerprogrammprodukt, das darauf gespeicherten Code aufweist, wobei der Code, wenn er durch einen Prozessor (510) ausgeführt wird, den Prozessor (510) veranlasst, ein Verfahren, das in einem oder mehreren der Ansprüche 1 bis 10 angegeben ist, zu implementieren.

**Revendications**

1. Procédé pour une communication sans fil, comprenant :

la détermination, pour une séquence x(i) de domaine fréquentiel, d'une séquence s(k) de domaine fréquentiel qui est une transformée de Fourier inverse d'une séquence S(j) de domaine fréquentiel, dans lequel S(j) est une sortie d'une opération de mise en forme de domaine fréquentiel comprenant une multiplication par points d'une séquence Y(j) de domaine fréquentiel et d'une séquence Z(j) de domaine fréquentiel, dans lequel Z(j) est déterminé sur la base d'une transformée de Fourier d'un ensemble de coefficients, dans lequel Y(j) correspond à la séquence x(i) de domaine temporel sur la base d'un paramètre N, et
dans lequel des valeurs de coefficients non nuls dans l'ensemble de coefficients sont représentées comme : [f(0), f(1), ..., f(2N)] = p · [g(0), g(1), ..., g(2N)], ou [f(0), f(1), ..., f(2N+1)] étant une convolution de p · [g(0), g(1), ..., g(2N)] et [h(0), h(1)], où g(0) = g(2N), g(1) = g(2N-1), ..., et g(N-1) = g(N+1), où g(0), g(1), ..., et g(N) correspondent aux valeurs de phase comprises entre 0 et $\pi/2$, [h(0), h(1)] = [1, 1], et où p est une valeur scalaire ; et
la génération d'une forme d'onde à l'aide de la séquence s(k) de domaine fréquentiel, où i vaut entre 0 et I-1, j vaut entre 0 et J-1, k vaut entre 0 et K-1, I < J < = K, et où I, J et K sont des nombres entiers non négatifs et N est un nombre entier positif.

2. Procédé de communication sans fil, comprenant :

la réception d'une séquence s(k) qui est générée sur la base d'une séquence x(i) de domaine fréquentiel, dans lequel la séquence s(k) est une transformée de Fourier inverse d'une séquence S(j) de domaine fréquentiel, et dans lequel S(j) est une sortie d'une opération de mise en forme de domaine fréquentiel comprenant une multiplication par points d'une séquence Y(j) de domaine fréquentiel et d'une séquence Z(j) de domaine fréquentiel, dans lequel Z(j) est déterminé sur la base d'une transformée de Fourier d'un ensemble de coefficients, dans lequel Y(j) correspond à la séquence x(i) de domaine fréquentiel sur la base d'un paramètre N, et
dans lequel des valeurs de coefficients non nuls dans l'ensemble de coefficients sont représentées comme : [f(0), f(1), ..., f(2N)] = p · [g(0), g(1), ..., g(2N)], ou [f(0), f(1), ..., f(2N+1)] étant une convolution de p · [g(0), g(1), ..., g(2N)] et [h(0), h(1)], où g(0) = g(2N), g(1) = g(2N-1), ..., et g(N-1) = g(N+1), où g(0), g(1), ..., et g(N) correspondent aux valeurs de phase comprises entre 0 et $\pi/2$, [h(0), h(1)] = [1, 1], et où p est une valeur scalaire ; et
la démodulation de la séquence s(k) pour déterminer la séquence x(i) de domaine fréquentiel, où i vaut entre 0 et I-1, j vaut entre 0 et J-1, k vaut entre 0 et K-1, et I < J < = K, et où I, J et K sont des nombres entiers non négatifs et N est un nombre entier positif.

3. Procédé selon l'une ou les quelconques des revendications 1 à 2, dans lequel p comprend un paramètre de normalisation, dans lequel p vaut 1, $\dfrac{1}{2\cos\left(\frac{\pi}{12}\right)}$, ou $\dfrac{1}{2\cos\left(\frac{\pi}{8}\right)}$...

4. Procédé selon l'une ou les quelconques des revendications 1 à 3, dans lequel Y(j) est obtenu par répétition d'une séquence X(i) de domaine fréquentiel N fois de telle sorte qu'une longueur de Y(j) vaut (N+1) fois une longueur de X(i), dans lequel X(i) est généré en réalisant une transformée de Fourier sur la séquence x(i) de domaine fréquentiel, et dans lequel la séquence x(i) de domaine fréquentiel est générée en mappant des bits de données sur des points de constellation selon un schéma de modulation.

5. Procédé selon la revendication 4, dans lequel le schéma de modulation comporte une modulation par déplacement de phase bivalente, BPSK, $\pi/2$.

6. Procédé selon la revendication 5, dans lequel une phase entre des éléments adjacents de la séquence de domaine temporel x(i) vaut 0 ou $\pi/4$ pour N = 1, ou 0 ou $\pi/6$ pour N = 2.

**7.** Procédé selon la revendication 2, comprenant en outre :
la détermination de la séquence x(i) de domaine fréquentiel à l'aide d'un algorithme de combinaison de rapport maximal.

**8.** Procédé selon l'une quelconque des revendications 5, 6, dans lequel les modules de tous les éléments de la séquence s(k) sont les mêmes lorsque le schéma de modulation de BPSK $\pi/2$ est combiné avec des coefficients de trajet après superposition des données de chemins.

**9.** Procédé selon l'une quelconque des revendications 1 à 8, dans lequel la séquence x(i) de domaine temporel comporte une séquence de données ou une séquence de référence.

**10.** Procédé selon l'une quelconque des revendications 1 à 9, dans lequel la séquence x(i) de domaine temporel comprend un ou plusieurs coefficients nuls.

**11.** Appareil de communication, comprenant un processeur (510) configuré pour mettre en oeuvre un procédé selon l'une ou les quelconques des revendications 1 à 10.

**12.** Produit-programme d'ordinateur ayant un code stocké sur celui-ci, le code, lorsqu'il est exécuté par un processeur (510), amenant le processeur (510) à mettre en œuvre un procédé selon l'une ou les quelconques des revendications 1 à 10.

100

determining, for a time-domain sequence x(i), an output sequence s(k)

110

generating a waveform using the output sequence s(k)

120

**FIG. 1**

EP 4 074 103 B1

200

receiving a sequence s(k) that is generated
based on a time-domain sequence x(i)
210

demodulating the sequence s(k) to determine
the time domain sequence x(i)
220

FIG. 2

FIG. 3A

Data sequence [x(i)]

FFT

Data sequence [X(i)]

N Repetitions

Data sequence [Y(i)]

Dot-multiply Z[(i)]

Data sequence [S(i)]

IFFT

Data sequence [s(k)]

FIG. 3B

400

410a

410b

405a

BS

425

Core Network

410c

410d

405b

BS

**FIG. 4**

**FIG. 5**

EP 4 074 103 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180034676 A1

- CA 2667187 A1

**Non-patent literature cited in the description**

- **C. ZHU ; B. CORCORAN ; A. J. LOWERY**. Experimental comparison between Nyquist-WDM and continuous DFT-S-OFDM systems. *2014 The European Conference on Optical Communication (ECOC), Cannes, France*, 2014, 1-3